# EUROPEAN PATENT APPLICATION

(11) **EP 4 553 600 A1**
(43) Date of publication of application: **14.05.2025**
(21) Application number: 24211602.8
(22) Date of filing: 08.11.2024
(51) Int. Cl.: G05D 1/242, G05D 1/246, G05D 1/667, G05D 105/28, G05D 107/70, G05D 109/10, G05D 111/10

(54) **TRANSPORTATION ROBOT AND METHOD OF CONTROLLING THE TRANSPORTATION ROBOT**

(30) Priority: 13.11.2023 US 202318507140
(71) Applicant: Rapyuta Robotics Co., Ltd., Tokyo 135-0023 (JP)
(72) Inventor: RYOTA, Yoneyama, Tokyo, 135-0023 (JP); PRAVEENKUMAR, Vasudevan, Tokyo, 135-0023 (JP); YU, Okamoto, Tokyo, 135-0023 (JP)
(74) Representative: FRKelly

(57) **Abstract**

A transportation robot 1 is configured to transport an item in a warehouse and includes: a sensor 50 configured to detect a three-dimensional shape of an object; and a controller 60 controlling a transportation operation of the transportation robot 1, the controller 60 comparing master data indicating a three-dimensional shape of a structure 200 located at a local spot in the warehouse and detection data indicating a three-dimensional shape of the structure 200 detected by the sensor 50 to identify the structure 200.

## Description

### TECHNICAL FIELD

The present disclosure relates to a transportation robot and a method of controlling the transportation robot.

### BACKGROUND

For example, WO2018/189110 discloses a warehouse system. In the warehouse system, trays storing items are arranged on a storage rack and a plurality of wheeled platforms are used to transport a tray from the storage rack to an order preparation station for preparing a delivery package. In such a warehouse system, a low accuracy in dropping a tray from a wheeled platform to a dropping position leads to a difficulty in the subsequent process.

An object of the present disclosure is to provide a transportation robot and a method of controlling the transportation robot that allow an item to be dropped at a dropping position with a high accuracy.

### SUMMARY

A transportation robot according to an aspect of the disclosure is a transportation robot configured to transport an item in a warehouse, the transportation robot including: a sensor configured to detect a three-dimensional shape of an object; and a controller controlling a transportation operation of the transportation robot, the controller comparing master data indicating a three-dimensional shape of a structure located at a local spot in the warehouse and detection data indicating a three-dimensional shape of the structure detected by the sensor to identify the structure.

In the transportation robot according to the aspect of the disclosure, the structure is a structure including a dropping position at which the item is to be dropped, and the controller identifies the dropping position of the structure by comparing the master data and the detection data.

In the transportation robot according to the aspect of the disclosure, the controller controls a travel of the transportation robot on the basis of map data two-dimensionally indicating a layout of structures including the structure in the warehouse.

In the transportation robot according to the aspect of the disclosure, the sensor includes a three-dimensional ranging sensor.

In the transportation robot according to the aspect of the disclosure, the master data is generated by mapping by the three-dimensional ranging sensor.

In the transportation robot according to the aspect of the disclosure, the item is loaded on a pallet.

In the transportation robot according to the aspect of the disclosure, the structure includes a rack or a conveyor, the rack defining a space for placing the pallet.

In the transportation robot according to the aspect of the disclosure, the transportation robot includes a forklift.

A method of controlling a transportation robot according to another aspect of the present disclosure is a method of controlling a transportation robot configured to transport an item in a warehouse, the method including comparing master data indicating a three-dimensional shape of a structure located at a local spot in the warehouse and detection data indicating a three-dimensional shape of the structure detected by a sensor to identify the structure.

A control program for a transportation robot according to still another aspect of the present disclosure is a control program for a transportation robot configured to transport an item in a warehouse, the control program causing a computer to compare master data indicating a three-dimensional shape of a structure located at a local spot in the warehouse and detection data indicating a three-dimensional shape of the structure detected by a sensor to identify the structure.

### BRIEF DESCRIPTION OF THE DRAWINGS

Fig. 1 is a perspective view schematically illustrating a warehouse system 100 in which a transportation robot 1 according to an embodiment of the present disclosure is installed;
Fig. 2 is a perspective view schematically illustrating a structure of a forklift 1 according to the embodiment of the present disclosure;
Fig. 3 is a side view schematically illustrating the structure of the forklift 1 according to the embodiment of the present disclosure;
Fig. 4 is a plan view schematically illustrating the structure of the forklift 1 according to the embodiment of the present disclosure;
Fig. 5 is a functional block diagram schematically illustrating a configuration of a management server 140;
Fig. 6 is a functional block diagram schematically illustrating a configuration of the forklift 1; and
Fig. 7 schematically illustrates a map 72 indicating a layout of structures in the warehouse system 100.

### DESCRIPTION OF THE EMBODIMENTS

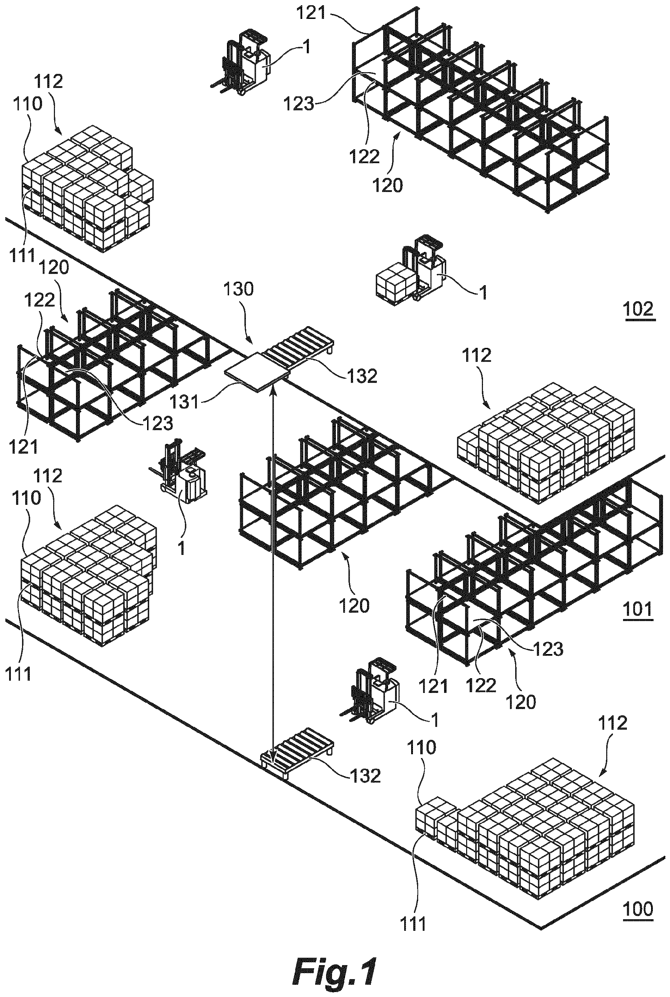

Description will be made below on an embodiment of the present disclosure with reference to the attached drawings. Fig. 1 is a perspective view schematically illustrating a warehouse system 100 in which a transportation robot 1 according to an embodiment of the present disclosure is installed. An example of the warehouse system 100 is established by, for example, a plurality of floors in a building. In this example, the warehouse system 100 includes a floor of a lower stair 101 and a floor of a stair above the lower stair 101, namely, upper stair 102, as illustrated in Fig. 1. A travelling path for the transportation robot 1 is formed on each of floor surfaces of the lower stair 101 and the upper stair 102. The transportation robot 1 is in the form of, for example, a forklift 1 and the forklift 1 is able to autonomically travel on the floor surface by virtue of self-location estimation on each of the lower stair 101 and the upper stair 102 as described later. In this example, a plurality of forklifts 1 are located on each of the lower stair 101 and the upper stair 102.

In the warehouse system 100, a temporary storage site 112 for temporarily storing a pallet 111 is defined in a predetermined region in the floor surfaces of the lower stair 101 and the upper stair 102 and one or more cardboard boxes 110 containing a number of the same or different items are loaded on a surface of the pallet 111. In this example, the pallet 111 is placed directly on the floor surface. Another one or more pallets 111, on which one or more cardboard boxes 111 are loaded, are further stacked on the cardboard boxes 110 loaded on the pallet 111. In this example, a plurality of temporary storage sites 112 may be defined in the floor surfaces. It should be noted that the pallet 111 is formed in the shape of, for example, a rectangular or square flat board in plan view. The pallet 111 has four side surfaces connecting a front surface and a back surface opposed to each other and a pair of insertion openings for receiving the insertion of forks of the forklift 1 are formed in each of the side surfaces.

The warehouse system 100 includes a rack 120 located on each of the floor surfaces of the lower stair 101 and the upper stair 102. The rack 120 is, for example, a storage shelf for storing the above-described one or more cardboard boxes 110 in a state of being loaded on the pallet 111. The rack 120 is a storage shelf for storing an item on the pallet 111. The rack 120 includes a plurality of rack units 122 formed by, for example, joining metal frame members 121. The rack 120 is formed by stacking the plurality of rack units 122 in a height direction and, simultaneously, joining the rack units 122 adjacent in a width direction and a length direction parallel with the floor surface to one another. In this example, the rack units 122 in two tiers are joined to each other in the height direction and the width direction and the plurality of rack units 122 are joined to one another in the length direction.

Each of the rack units 122 defines a single accommodation space 123 that accommodates the pallet 111 loaded with one or more cardboard boxes 110. The forks of the forklift 1 have access to each of the accommodation spaces 123 from a side surface of the rack 120. The forklift 1 is thus able to stow the pallet 111 in the accommodation space 123 from the side surface of the rack 120 and take the pallet 111 out of the accommodation space 123 from the side surface of the rack 120. It should be noted that the numbers of the rack units 122 of the above-described rack 120 in the height direction and the length direction are by way of example and the rack 120 may be formed by joining any other number of the rack units 122 to one another.

The warehouse system 100 includes a vertical transporter 130 and the vertical transporter 130 is able to transport the pallet 111 loaded with one or more cardboard boxes 110 between the lower stair 101 and the upper stair 102. The vertical transporter 130 includes a transportation mechanism 131 and a conveyor 132. The transportation mechanism 131 is movable up and down in a vertical transportation space. The conveyor 132 extends to the transportation mechanism 131 on each of the lower stair 101 and the upper stair 102. The conveyor 132 allows for, for example, transporting the pallet 111 transported to the conveyor 132 by the forklift 1 to the transportation mechanism 131 and transporting the pallet 111 transported by the transportation mechanism 131 immediately near the forklift 1. The transportation mechanism 131 allows for transporting the pallet 111 transported through the conveyor 132 from the lower stair 101 to the upper stair 102 or from the upper stair 102 to the lower stair 101.

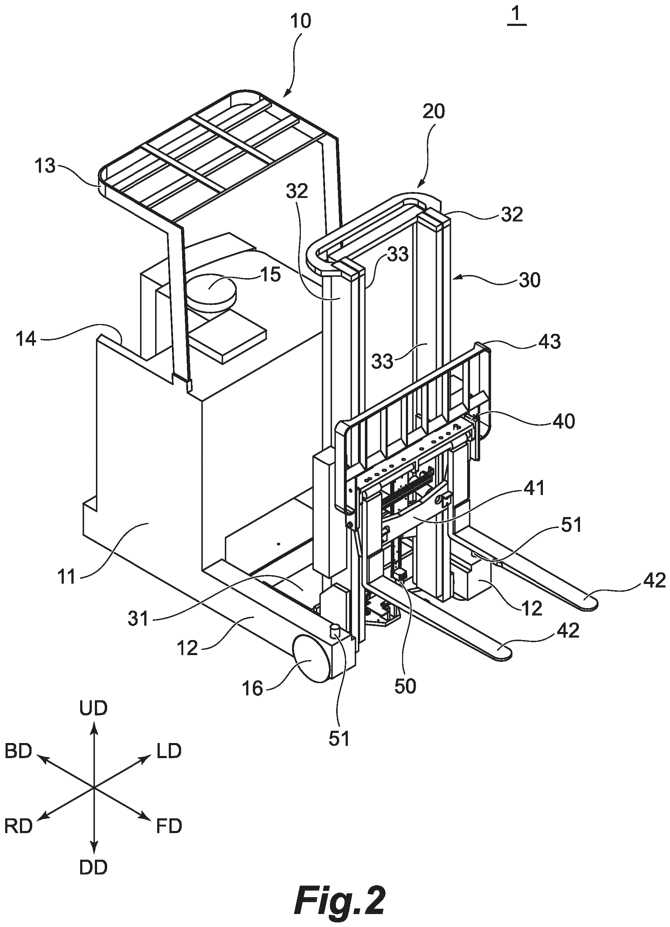

A movement path of the forklift 1 includes, in a plan view of each of the floor surfaces of the lower stair 101 and the upper stair 102, a region defining the temporary storage site 112 and a region other than the region where the rack 120 is located. It should be noted that a predetermined region around the temporary storage site 112 and a predetermined region around the rack 120 are actually defined as a buffer region where the traveling of the forklift 1 is restricted. Fig. 2 is a perspective view schematically illustrating a structure of the forklift 1 according to the embodiment of the present disclosure. The forklift 1 is used to transport an item 110 loaded on the pallet 111 to a variety of positions within the warehouse system 100. While being able to autonomically travel on the basis of self-location estimation within the warehouse system 100 as described above, the forklift 1 is also able to manually travel in accordance with an operation of an operator instead.

It should be noted that regarding front-and-back directions of the forklift 1, a direction toward a front side of the forklift 1 is defined as a forward direction FD and a direction toward a rear side of the forklift 1 opposite the forward direction FD is defined as a backward direction BD. Likewise, regarding the height direction of the forklift 1, a direction toward an upper side of the forklift 1 is defined as an upward direction UD and a direction toward a lower side of the forklift 1 opposite the upward direction UD is defined as a downward direction DD. Further, regarding right-and-left directions of the forklift 1, a direction toward a left side of the forklift 1 is defined as a left direction LD and a direction toward a right side of the forklift 1 opposite the left direction LD is defined as a right direction RD.

The forklift 1 includes a vehicle body 10 and a loading/unloading assembly 20 located in a front end of the vehicle body 10. The vehicle body 10 includes a main body 11, a pair of straddle legs 12, 12 extending from a front end of the main body 11 in the forward direction FD in parallel with each other, and a head guard 13 attached to an upper end of the main body 11. The main body 11 includes a cab 14 for an operator to stand on in, for example, a rear end thereof and an operation unit 15 for the operator to operate the forklift 1 on an upper surface thereof. The loading/unloading assembly 20 is located between the straddle legs 12, 12. The head guard 13 prevents a package from falling toward the operator from above.

The vehicle body 10 includes a pair of front wheels 16, 16 located in lower portions of the respective straddle legs 12, 12 and, for example, a single rear wheel (not illustrated) located in a lower portion of the main body 11. The rear wheel is connected to a drive motor (not illustrated) installed in, for example, the main body 11. An electric power is supplied to the drive motor from, for example, a battery (not illustrated) also installed in the main body 11. In other words, the rear wheel is a drive wheel, whereas the front wheels 16 are slave wheels. For example, the rear wheel is located offset in the left direction FD with respect to a center of the forklift 1 in the right-and-left directions. The rear wheel is driven in a moving direction with a change in angle in the right-and-left directions, which enables the forklift 1 to move back and forth and right and left. It should be noted that the forklift 1 travels while facing the backward direction BD during transportation of the pallet 111.

The loading/unloading assembly 20 is an assembly allowing for lifting and lowering the pallet 111. The loading/unloading assembly 20 includes a mast assembly 30 and a fork assembly 40. The mast assembly 30 is supported between the pair of straddle legs 12, 12 and is movable in the forward direction FD and the backward direction BD. The fork assembly 40 is supported on a front end of the mast assembly 30 and is movable in the upward direction UD and the downward direction DD. It should be noted that the mast assembly 30 is placed at a most advanced position in the forward direction FD when being in a state illustrated in Fig. 1. Meanwhile, the fork assembly 40 is placed at a position reached as moving in the upward direction UD from a lowermost position.

The mast assembly 30 includes a base 31 located between the pair of straddle legs 12, 12, a pair of outer masts 32, 32 standing upright in the upward direction UD from the base 31, and a pair of inner masts 33, 33 located on internal sides of the pair of respective outer masts 32, 32 in the left direction LD and the right direction RD. The outer masts 32, 32 are formed integrally with, for example, a front end of the base 31. The outer masts 32, 32 are spaced from each other at a predetermined distance in the right-and-left directions. The base 31, the outer masts 32, 32, and the inner masts 33, 33 are supported between the pair of straddle legs 12, 12 and are movable in the forward direction FD and the backward direction BD.

The inner masts 33, 33 stand upright in the height direction adjacently to the internal sides of the respective outer masts 32, 32 in the right-and-left directions. The inner masts 33, 33 are supported by the outer masts 32, 32 in a manner to be relatively movable in the height direction with respect to the outer masts 32, 32. The fork assembly 40 is supported by the inner masts 33, 33 in a manner to be relatively movable in the height direction with respect to the inner masts 33, 33. It should be noted that the fork assembly 40 is supported by the outer masts 32 via the inner masts 33, 33 and is thus movable in the forward direction FD and the backward direction BD along with the bracket 31, the outer masts 32, and the inner masts 33.

The fork assembly 40 includes a bracket 41, a pair of forks 42, 42, and a backrest 43. The bracket 41 is supported by the inner masts 33, 33 and is relatively movable in the height direction with respect to the inner masts 33, 33. The pair of forks 42, 42 are attached to a front surface of the bracket 41. The pair of forks 42, 42 each extend in the forward direction FD from the bracket 41 at, for example, a position where one of the outer masts 32 and one of the inner masts 33 are located in the right-and-left directions. The backrest 43 is attached to, for example, an upper end of the bracket 41. The backrest 43 prevents a package on the pallet lifted by the forks 42 from falling behind the fork assembly 40.

A ranging sensor 50 is attached to the bracket 41. In this example, the ranging sensor 50 is located at a center of the forklift 1 in the right-and-left directions. In addition, the ranging sensor 50 is movable in the height direction along with the bracket 41, or fork assembly 40. A 3D LiDAR (optical detection and ranging) sensor is used as the ranging sensor 50 and the 3D LiDAR sensor is able to detect whether or not an object is present within a predetermined three-dimensional detection range in the forward direction FD with respect to the forklift 1. Specifically, the ranging sensor 50 acquires three-dimensional point cloud data regarding an object within the detection range by irradiating the detection range with a laser beam. The point cloud data is an aggregate of data having three-dimensional coordinates in the three-dimensional detection range. The point cloud data includes coordinates and color information regarding each of points and a shape of the object and a distance to the object within the detection range are detected by measuring a distance to each of the points from the ranging sensor 50.

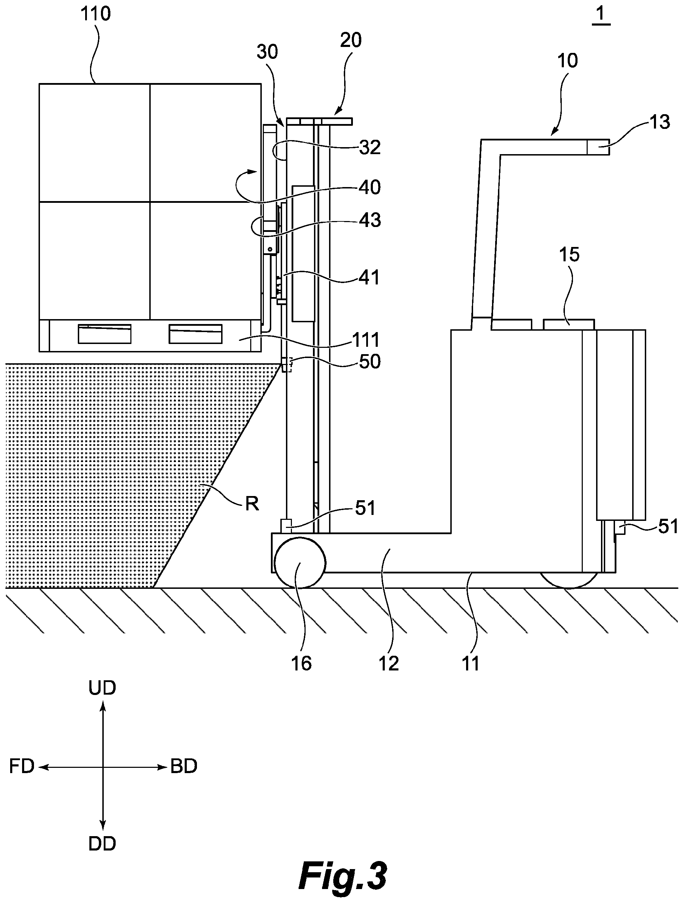

Fig. 3 is a side view schematically illustrating the structure of the forklift 1 according to the embodiment of the present disclosure. Fig. 3 illustrates a state where the pallet 111 is lifted by the fork assembly 40. Referring also to Fig. 3, a three-dimensional detection range R of the ranging sensor 50 is defined, for example, below the fork assembly 40 and toward the forward direction FD from the forklift 1. The detection range R is defined by a predetermined angular range in the right-and-left directions of the forklift 1 and a predetermined angular range in the height direction of the forklift 1 at a predetermined irradiation distance. In an example of the ranging sensor 50, the irradiation distance is set at 3 m, the angular range in the right-and-left directions is set at 145 degrees, and the angular range in the height direction is set at 60 degrees. In addition, a frequency of the laser beam of the ranging sensor 50 is set in, for example, a range from 5 to 10 Hz. These numeral values of the ranging sensor 50 are merely by way of example and any other numeral value may be set.

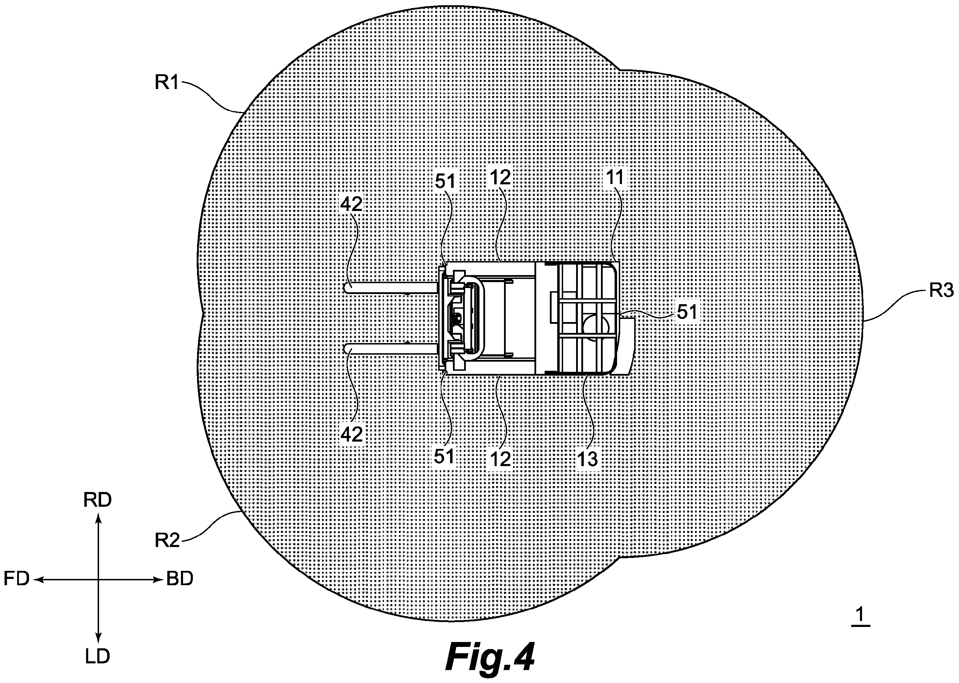

Fig. 4 is a plan view schematically illustrating the structure of the forklift 1 according to the embodiment of the present disclosure. As illustrated in Fig. 4, the forklift 1 further includes another three ranging sensors 51. The ranging sensors 51 are, for example, 2D LiDAR sensors. For example, while one of the ranging sensors 51 may be attached to front ends of the respective straddle legs 12, one of the ranging sensors 51 may be attached at a position in a lower rear end of the main body 11. The three ranging sensors 51 are located at the same level from the floor surface. The right front ranging sensor 51 has a detection range R1 in the forward direction FD and the right direction RD. The left front ranging sensor 51 has a detection range R2 in the forward direction FD and the left direction LD. The rear ranging sensor 51 has a detection range R3 in the backward direction BD.

The detection ranges R1, R2, R3 of the three ranging sensors 51 overlap one another. As a result, the three ranging sensors 51 have the 360-degree detection ranges R1, R2, R3 around an axis defined in the height direction of the forklift 1. The three ranging sensors 51 acquire two-dimensional point cloud data regarding objects within the respective three detection ranges R1, R2, R3 by irradiating the detection ranges R1, R2, R3 with a laser beam. The point cloud data includes coordinates and color information regarding individual points and shapes of the objects and distances to the objects within the detection ranges are detected by measuring distances to the individual points from the ranging sensors 51. By virtue of the ranging sensors 51, a two-dimensional map of a layout of structures including the temporary storage site 112, the rack 120, the conveyor 132, and the like is generated by mapping of the lower stair 101 and the upper stair 102 of the warehouse system 100.

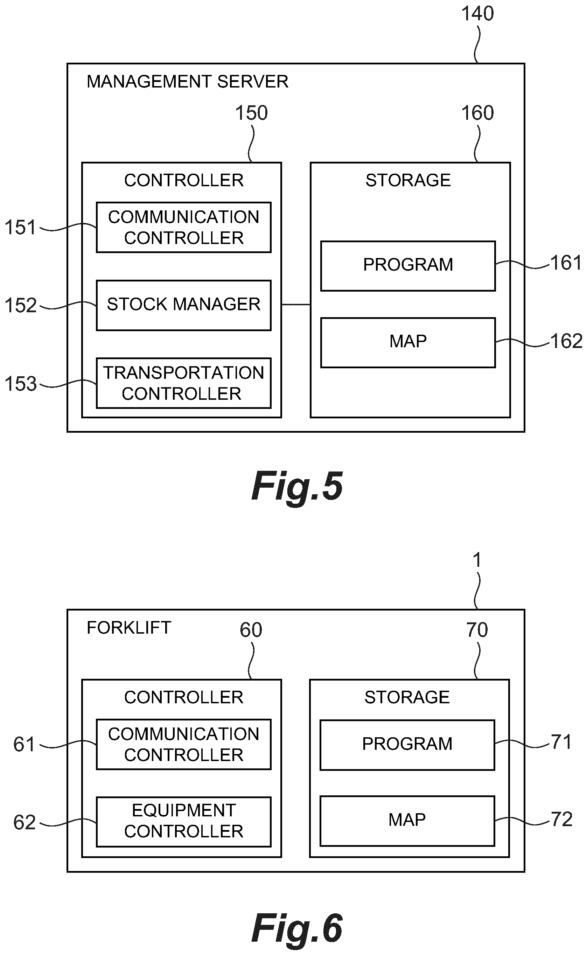

As illustrated in Fig. 5, the warehouse system 100 includes a management server 140 and the management server 140 performs a management of operations of the forklift 1 for reception, storing, and shipping of items, storing statuses of items at the temporary storage site 112 and the rack 120, and the like. The management is implemented by a controller (a computer) executing a program stored in a storage as described later. Specifically, these processes are performed in line with information processing written in the program. This means that as the program is read by the controller, the information processing written in the program functions as a specific means provided by a cooperation of software related to the program and a variety of hardware resources of the warehouse system 100.

The management server 140 includes a controller 150 and a storage 160. The controller 150 includes a communication controller 151, a stock manager 152, and a transportation controller 153. The storage 160 stores a program 161 for controlling processes related to reception, storing, and shipping of items in the warehouse system 100 and a map 162 indicating a layout of the temporary storage site 112, the rack 120, and the conveyor 132 in the warehouse system 100. In addition to the above, the storage 160 also stores information regarding items placed at the temporary storage site 112 and the rack 120 (for example, information for managing which item is placed at which location), and the like. The controller 150 performs a management of the warehouse system 100 by executing the program 161 stored in the storage 160. The management server 140 may be implemented by, for example, a physical server installed in a building where the warehouse system 100 is established or may be implemented by, for example, a cloud server constructed on the Internet.

The communication controller 151 controls a communication between the management server 140 and the forklift 1. A communication scheme may be, for example, Wi-Fi (registered trademark), Bluetooth (registered trademark), or the like. The stock manager 152 performs a management of a stock status in the warehouse system 100. Specifically, the stock manager 152 performs a management of information (SKU) for identifying each item, information regarding a stock quantity of each item identified by the SKU, information (ID) for identifying a position where the item is stored, and the like in association with one another. The transportation controller 153 performs a management and a control of operations of the forklift 1 and the vertical transporter 130. Specifically, the transportation controller 153 generates a transportation instruction for instructing the forklift 1 about which item at which location is to be transported to which location in the warehouse system 100.

A more specific description will be made on how the transportation controller 153 generates a transportation instruction. The transportation controller 153 generates a transportation instruction to a predetermined forklift 1 for each reception or shipping into/from the warehouse system 100. Description on a case where an order requires an item to be transported only within the lower stair 101 or the upper stair 102 is as follows. The transportation instruction in this case includes, for example, a) a first movement path from a current position of the forklift 1 to a designated pallet 111, b) an order regarding a picking operation to pick the designated pallet 111, c) a second movement path for transporting the designated pallet 111 to a designated location, and d) an order regarding a dropping operation to drop the designated pallet 111 at the designated location.

Meanwhile, description on an instruction for transportation from the lower stair 101 to the upper stair 102 or from the upper stair 102 to the lower stair 101 is as follows. Specifically, the transportation instruction includes a first transportation instruction to the forklift 1 located one of the stairs and a second transportation instruction to the forklift 1 located on the other stair. The first transportation instruction includes a) a first movement path from a current position of the forklift 1 to a designated pallet 111, b) an order regarding a picking operation to pick the designated pallet 111, c) a second movement path to the conveyor 132 of the vertical transporter 130, and d) an order regarding a dropping operation to drop the designated pallet 111 on the conveyor 132.

The second transportation instruction includes a) a first movement path from a current position of the forklift 1 to the conveyor 132 of the vertical transporter 130, b) an order regarding a picking operation to pick a designated pallet 111, c) a second movement path to a designated location to which the designated pallet 111 is to be transported, and d) an order regarding a dropping operation to drop the designated pallet 111 at the designated location. As seen from the above, for the instruction for transportation from the lower stair 101 to the upper stair 102 or the instruction for transportation from the upper stair 102 to the lower stair 101, the transportation instructions are to be sent to the separate forklifts 1. It should be noted that the first movement path and the second movement path are not necessarily shortest paths and may be schematic paths for the forklift 1 to be movable on the map 162 of the warehouse system 100.

Fig. 6 is a functional block diagram schematically illustrating a configuration of the forklift 1. The forklift 1 includes a controller (a computer) 60 and a storage 70. The controller 60 includes a communication controller 61 and an equipment controller 62. The storage 70 stores a program 71 for controlling the operation of the forklift 1 and a map 72 indicating the layout of the temporary storage site 112, the rack 120, and the conveyor 132 in the warehouse system 100. The map 72 is the same as the map 162 stored in the storage 160 of the management server 140. The map 72 is generated by, for example, mapping using the ranging (2D LiDAR) sensors 51 and the ranging (3D LiDAR) sensor 50. The map 72 will be described later in detail.

The controller 60 controls the operation of the forklift 1 by executing the program 71 stored in the storage 70. The communication controller 61 controls a communication between the management server 140 and the forklift 1. The equipment controller 62 controls the operation of the forklift 1. Specifically, the equipment controller 61 is able to control a forward movement, a backward movement, right and left turns of the forklift 1 based on the driving of the rear wheel and operations related to picking and dropping of the pallet 111 based on the driving of the mast assembly 30 and the fork assembly 40 of the loading/unloading assembly 20.

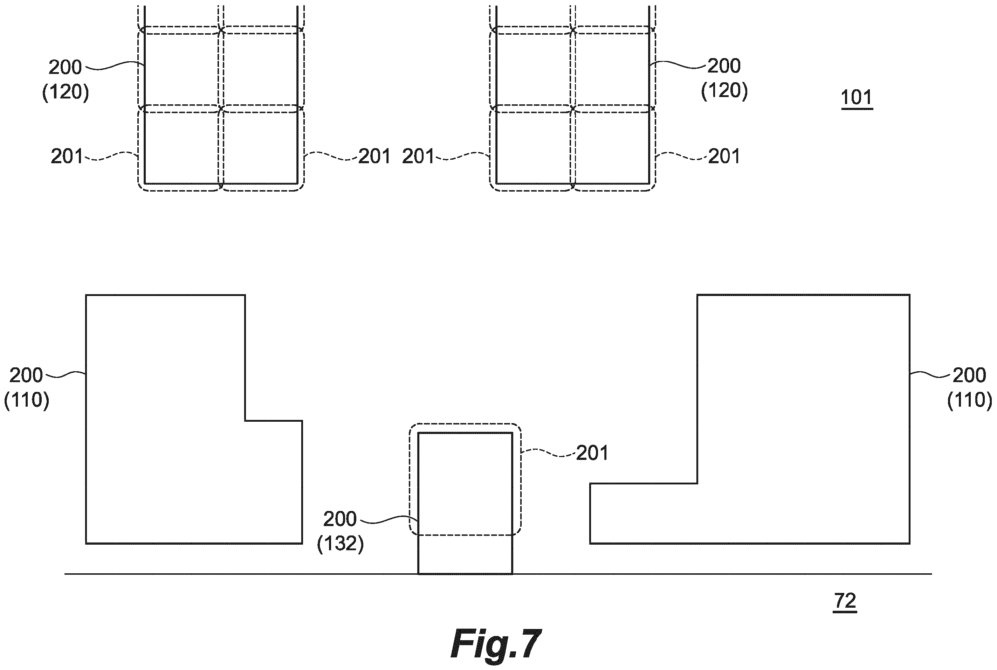

Fig. 7 schematically illustrates the map 72 indicating a layout of structures in the warehouse system 100. In this example, the map 72 indicates, for example, a layout of structures 200 on the lower stair 101. The structures 200 include the cardboard box 110 (or the pallet 111), the rack 120, the conveyor 132, and the like. The map 72 is generated by mapping using the three ranging (2D LiDAR) sensors 51 and the single ranging sensor (3D LiDAR) 50 of the forklift 1. Specifically, point cloud data regarding two-dimensional shapes of the structures 200 is acquired by causing the ranging sensors 51 located at the predetermined level from the floor surface to scan shapes of the structures 200. Outline shapes of the structures 200 are shown on the map 72 on the basis of the acquired point cloud data.

The point cloud data regarding the two-dimensional shapes of the structures 200 on the map 72 is data serving as a reference when the forklift 1 travels by self-location estimation. Specifically, the point cloud data regarding the two-dimensional shapes is master data indicating two-dimensional coordinate values of the structures 200. The forklift 1 is able to travel while estimating a self-location within the warehouse system 100 by a comparison between the master data indicated by the map 72 and detection data indicating the two-dimensional coordinate values of the structures 200 detected by the ranging sensors 51 during the travel. It should be noted that the location of the cardboard box 110 (or the pallet 111) placed at the temporary storage site 112 varies with time and, accordingly, the master data regarding the cardboard box 110 (or the pallet 111) may be regularly updated.

The map 72 further includes master data indicating three-dimensional coordinate values of dropping positions 201 where the pallet 111 (loaded with the cardboard box 110) is to be dropped in the structures 200. In this example, the dropping positions 201 are defined in the accommodation space 123 of each of the rack units 122 of the rack 120 or the conveyor 132 of the vertical transporter 130. The three-dimensional shapes of the accommodation spaces 123 of the rack units 122 and the conveyor 132 of the vertical transporter 130 are mapped in advance using the ranging sensor 50 and the master data regarding the dropping positions 201 is generated on the basis of the point cloud data regarding the three-dimensional shapes of these dropping positions 201. In the map 72, the three-dimensional master data regarding the dropping positions 201 is held with superposition with the two-dimensional shapes of the structures 200.

For example, the master data regarding the three-dimensional shape of the dropping position 201 of the conveyor 132 includes three-dimensional coordinate values of the dropping position 201 on the conveyor 132, three-three-dimensional coordinate values of a frame, a roller, and the like of the conveyor 132 around the dropping position 201, and the like. In addition, for example, the master data regarding the three-dimensional shape of the accommodation space 123 of each of the rack units 122 of the rack 120 includes three-dimensional coordinate values of the dropping position 201 on the accommodation space 123, three-dimensional coordinate values of the frame members 121 and the like of the rack unit 122 around the dropping position 201, and the like. In addition, in the above-described embodiment, the rack 120 includes the rack units 122 stacked in two tiers in the height direction and the three-dimensional shape values of the dropping positions 201 are registered as the master data for the respective rack units 122 in the first tier and the second tier.

Next, description will be made on a scene where the pallet 111 is to be transported by the forklift 1. A transportation instruction is sent to the predetermined forklift 1 from the transportation controller 153 of the management server 140. In response to the reception of the transportation instruction, the forklift 1 moves to a designated picking position from the current position in accordance with the transportation instruction. During the travel for movement, the forklift 1 estimates a self-location on the basis of point cloud data regarding the two-dimensional shape acquired by the three ranging sensors 51 at a predetermined time interval. When arriving at the designated picking position, the forklift 1 recognizes positions of the insertion openings in the side surface of the pallet 111 at the picking position using the ranging sensor 50. As a result, the forklift 1 inserts the pair of forks 42, 42 of the fork assembly 40 into the pair of insertion openings and lifts the pallet 111.

The forklift 1 holding the pallet 111 then travels toward a designated dropping position in accordance with the transportation instruction. The forklift 1 estimates a self-location as described above. When arriving at the dropping position (for example, the rack unit 121 or the conveyor 132), the forklift 1 acquires the three-dimensional coordinate values of the designated dropping position using the ranging sensor 50. Specifically, point cloud data regarding the three-dimensional shape of the dropping position is detected by the ranging sensor 50. The controller 60 compares the three-dimensional detection data with three-dimensional master data regarding the dropping position 201 in the map 72 stored in the storage 70. In this example, an ICP (Iterative Closest Point) technique is used to perform 3D template matching. The dropping position is recognized in this manner. The pallet 111 is dropped at the recognized dropping position.

In the warehouse system 100 as described above, the self-location estimation of the forklift 1 is performed on the basis of a comparison between the two-dimensional master data defined in the map 72 and the actual two-dimensional detection data during a movement from the current position to a picking position and during a movement from the picking position to a dropping position. Meanwhile, for dropping at the dropping position, the dropping position is identified on the basis of a comparison between the three-dimensional master data defined in the map 72 and the actual three-dimensional detection data. The forklift 1 is able to drop the pallet 111 at the dropping position with a high accuracy on the basis of the identification. Therefore, the use of the two-dimensional master data during the movement of the forklift 1 and the use of the three-dimensional master data during the dropping operation make it possible to reduce a load of data processing.

In addition, it is usually possible to pick the pallet 111 by three-dimensionally detecting the shapes of the insertion openings of the pallet at the picking position. In other words, since the insertion openings of the pallet 111 often have a standardized shape in accordance with standards or the like, it is possible to facilitate the picking operation by estimation of the positions of the insertion openings or the like. In contrast, the dropping position varies in shape depending on whether it is the rack unit 122, the conveyor 132, or the like. Accordingly, it is beneficial to three-dimensionally recognize the dropping position with a high accuracy. It should be noted that the forklift 1 is referred to as an example of the transportation robot in the description on the above-described embodiment; however, the present disclosure may be applied to any other transportation robot in addition to the forklift 1. In addition, in the above-described embodiment, the dropping positions 201 of the structures 200 are identified by a comparison with the three-dimensional master data; however, the structures 200 may include, for example, other structures such as a charging facility for the forklift 1 and a narrow passage in the warehouse system 100.

The same reference numerals are used for referring to the same or similar components throughout all the drawings. The following embodiment is not intended to limit the invention according to any of claims. A feature of the present invention is described herein but alterations and modifications thereof are possible without departing from the spirit and scope of the embodiment as disclosed. Further, specific features, structures, or characteristics may be combined in any appropriate manner in one or more embodiments. The following detailed description is considered merely as an example and the true scope and spirit should be defined by claims.

## Claims

1. A transportation robot configured to transport an item in a warehouse, the transportation robot comprising:
a sensor configured to detect a three-dimensional shape of an object; and
a controller controlling a transportation operation of the transportation robot, the controller comparing master data indicating a three-dimensional shape of a structure located at a local spot in the warehouse and detection data indicating a three-dimensional shape of the structure detected by the sensor to identify the structure.

2. The transportation robot according to claim 1, wherein
the structure includes a dropping position at which the item is to be dropped, and
the controller identifies the dropping position of the structure by comparing the master data and the detection data.

3. The transportation robot according to any of the claims 1 to 2, wherein the controller controls a travel of the transportation robot on a basis of map data two-dimensionally indicating a layout of structures including the structure in the warehouse.

4. The transportation robot according to any of the claims 1 to 3, wherein the sensor includes a three-dimensional ranging sensor.

5. The transportation robot according to any of the claims 1 to 4, wherein the master data is generated by mapping by the three-dimensional ranging sensor.

6. The transportation robot according to any of the claims 1 to 5, wherein the item is loaded on a pallet.

7. The transportation robot according to any of the claims 1 to 6, wherein the structure includes a rack or a conveyor or a narrow passage in the warehouse, the rack defining a space for placing the pallet.

8. The transportation robot according to any of the claims 1 to 7, wherein the transportation robot includes a forklift.

9. The transportation robot according to any of the claims 1 to 8, wherein the sensor detects the two-dimensional coordinate values of the structure during the travel as part of the detection data, to estimate self-location based on the master data and the detection data.

10. The transportation robot according to any of the claims 1 to 9, wherein the transportation robot is configured to pick the pallet by detecting the shape of the insertion openings of the pallet at the picking position based on the standard shape of the insertion openings of the pallet.

11. The transportation robot according to any of the claims 1 to 10, wherein the transportation robot is configured to drop the pallet, based on the shape of the structure, at the dropping position.

12. The transportation robot according to any of the claims 1 to 11, wherein the transportation robot is configured to pick the pallet from a floor and drop the pallet on the structure on another floor.

13. A method of controlling a transportation robot configured to transport an item in a warehouse according to any of the claims 1 to 12.

14. A system to control a transportation robot configured to transport an item in a warehouse according to any of the claims 1 to 12.

15. A computer readable medium comprising instructions which, when executed by a computer, cause the transportation robot to transport an item in a warehouse according to any of the claims 1 to 12.
